# EUROPEAN PATENT SPECIFICATION

(11) **EP 3 139 129 B1**
(45) Date of publication and mention of the grant of the patent: **08.12.2021**
(21) Application number: 16185229.8
(22) Date of filing: 23.08.2016
(51) Int. Cl.: G01C 17/38, G01C 22/00

(54) **MOBILE DEVICE, CONTROL METHOD, AND NON-TRANSITORY STORAGE MEDIUM**
MOBILE VORRICHTUNG, STEUERUNGSVERFAHREN UND NICHTFLÜCHTIGES SPEICHERMEDIUM
DISPOSITIF MOBILE, PROCÉDÉ DE COMMANDE ET SUPPORT DE STOCKAGE NON TRANSITOIRE

(30) Priority: 07.09.2015 JP 2015176095
(43) Date of publication of application: 08.03.2017
(73) Proprietor: Kyocera Corporation, Kyoto-shi Kyoto 612-8501 (JP)
(72) Inventor: TANABE, Shigeki, Kyoto-shi Kyoto 612-8501 (JP); MORITA, Hideki, Kyoto-shi Kyoto 612-8501 (JP); MASUIKE, Isao, Kyoto-shi Kyoto 612-8501 (JP); SAITO, Shinya, Kyoto-shi Kyoto 612-8501 (JP)
(74) Representative: SSM Sandmair

(56) References cited:
- EP-A1- 2 009 394
- US-A1- 2008 172 174
- SAMULI HEMMINKI ET AL: "Accelerometer-based transportation mode detection on smartphones", PROCEEDINGS OF THE 11TH ACM CONFERENCE ON EMBEDDED NETWORKED SENSOR SYSTEMS, SENSYS '13, 1 January 2013 (2013-01-01), pages 1-14, XP055535579, New York, New York, USA DOI: 10.1145/2517351.2517367 ISBN: 978-1-4503-2027-6
- Xing Su ET AL: "Travel Mode Identification with Smartphones", Proceedings of 94th Transportation Research Board Annual Meeting, 1 January 2015 (2015-01-01), pages 1-18, XP055262986, Washington DC, USA Retrieved from the Internet: URL:http://hixing.weebly.com/uploads/5/2/5 /3/52538413/smartphone_based_travel_mode_r ecognition.pdf [retrieved on 2016-04-05]

## Description

### Field

The present application relates to a mobile device, a control method, and a non-transitory storage medium.

### Background

Conventionally, some mobile devices have installed a geomagnetic sensor that detects an azimuth of the mobile device by measuring geomagnetism (refer to Patent Literature 1). The mobile devices installing the geomagnetic sensor generally execute a process to reset an azimuth calculation standard, or what is called a calibration for the purpose of correcting errors that can occur in the azimuth detected by the geomagnetic sensor due to influence of a magnetic field other than geomagnetism. Conventional technologies are described in Patent Literature 2, for example. US 2008/172174 A1 discloses a mobile bearing calculator having a geomagnetic sensor. When it is detected that the user has entered into an area where error occurs in the detection values of the geomagnetic sensor due to the influence of external magnetic fields, the processing for correction of offset error is prohibited.

### Citation List

### Patent Literature

Patent Literature 1: Japanese Patent Publication Laid-open No. 2005-207799
Patent Literature 2: Re-publication of PCT International Publication No. 2010-131599

### Summary

The correction processing, or what is called calibration, for detecting the azimuth of the mobile device by the geomagnetic sensor has room for improvement.

According to one aspect, there is provided a mobile device according to claim 1.

According to one aspect, there is provided a control method executed by a mobile device according to claim 6.

According to one aspect, there is provided a non-transitory storage medium according to claim 7.

### Brief Description of Drawings

FIG. 1 is a block diagram of a functional configuration of a smartphone according to an embodiment; and
FIG. 2 is a flowchart of an example of processing executed by the smartphone according to the embodiment.

### Detailed Description

The following describes a plurality of embodiments for performing a mobile device, a control method, and a non-transitory storage medium according to the present application in detail with reference to the accompanying drawings. The following describes a smartphone as an example of the mobile device according to the present application. In the following description, similar components may be denoted by the same symbols. Furthermore, a duplicate description may be omitted.

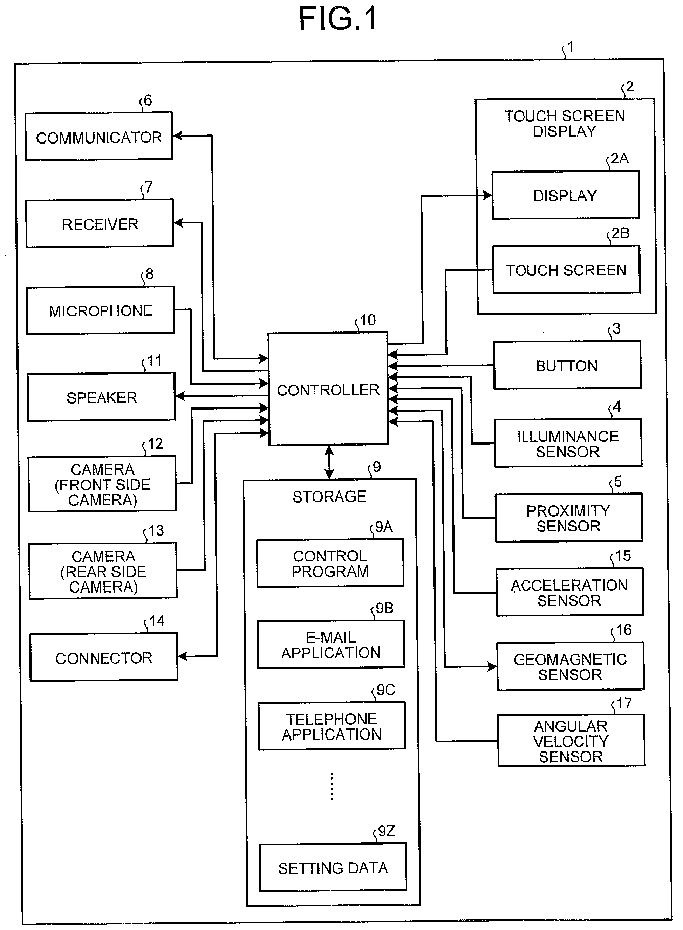

The following describes an example of a functional configuration of a smartphone 1 according to an example of embodiments with reference to FIG. 1. FIG. 1 is a block diagram of the functional configuration of the smartphone 1.

As illustrated in FIG. 1, the smartphone 1 includes a touch screen display 2, one or a plurality of buttons 3, an illuminance sensor 4, a proximity sensor 5, a communicator 6, a receiver 7, a microphone 8, a storage 9, a controller 10, a speaker 11, a camera 12, a camera 13, a connector 14, an acceleration sensor 15, a geomagnetic sensor 16, and an angular velocity sensor 17. In the following description, the smartphone 1 may be referred to as a "device."

The touch screen display 2 includes a display 2A and a touch screen 2B. The display 2A and the touch screen 2B may be positioned to overlap with each other, positioned adjacent to each other, or positioned separated from each other, for example. When the display 2A and the touch screen 2B are positioned to overlap with each other, one or a plurality of sides of the display 2A are not necessarily along any side of the touch screen 2B, for example.

The display 2A includes a display device such as a liquid crystal display (LCD), an organic electroluminescence display (OELD), or an inorganic electroluminescence display (IELD). The display 2A can display objects such as letters, images, symbols, and figures within a screen. Examples of the screen containing the objects such as letters, images, symbols, and figures that the display 2A displays include a screen called a lock screen, a screen called a home screen, and an application screen displayed while an application is being executed. The home screen may also be called a desktop, an idle screen, a stand-by screen, a standard screen, an application list screen, or a launcher screen.

The touch screen 2B can detect contact or proximity of one or more fingers, one or more pens, one or more stylus pens, or the like against the touch screen 2B. When the one or more fingers, the one or more pens, the one or more stylus pens, or the like are in contact with or close to the touch screen 2B, the touch screen 2B can detect the positions on the touch screen 2B. The fingers, pens, stylus pens, or the like detected by the touch screen 2B may be referred to as "finger." The position in contact with or close to the finger, detected by the touch screen 2B, may be referred to as "detection position." The touch screen 2B can notify the controller 10 of the contact of the finger with the touch screen 2B together with the detection position. The touch screen display 2 including the touch screen 2B can execute operation that the touch screen 2B can perform. In other words, the touch screen display 2 may perform the operation that the touch screen 2B performs. Operation against the touch screen 2B can be translated into operation against the touch screen display 2 including the touch screen 2B. The operation against the touch screen 2B can be translated into operation against the smartphone 1 including the touch screen 2B. In an embodiment, the touch screen 2B can employ an electrostatic capacitance system, a resistance film system, or a load detection system as a detection system as appropriate.

The controller 10 can determine type of a gesture based on at least one of the amount of contact detected by the touch screen 2B, a position at which a contact is detected, a change in a position at which a contact is detected, a duration during which a contact is detected, an interval during which contacts are detected, and the number of times contacts are detected. The smartphone 1 including the controller 10 can execute operation that the controller 10 can perform. In other words, the smartphone 1 may perform the operation that the controller 10 performs. The gesture is an operation performed against the touch screen 2B using the finger. The operation performed against the touch screen 2B may be performed against the touch screen display 2 including the touch screen 2B. Examples of the gesture that the controller 10 determines via the touch screen 2B include, but are not limited to, touch, long touch, release, swipe, tap, double tap, long tap, drag, flick, pinch-in, and pinch-out.

The button 3 receives operation input from a user. Upon reception of the operation input from the user, the button 3 notifies the controller 10 of the fact that the operation input has been received. The number of the button 3 may be one or more.

The illuminance sensor 4 can detect illuminance. The illuminance is a value of a light bundle entering a unit area of a measuring plane of the illuminance sensor 4. The illuminance sensor 4 may be used for adjustment of luminance of the display 2A, for example.

The proximity sensor 5 can detect presence of a nearby object in a noncontact manner. The proximity sensor 5 detects the presence of the object based on a change in a magnetic field, a change in return time of a reflective wave of an ultrasonic wave, or the like. The proximity sensor 5 may be used to detect that a face of the user has approached the display 2A, for example. The illuminance sensor 4 and the proximity sensor 5 may be configured as one sensor. The illuminance sensor 4 may be used as a proximity sensor.

The communicator 6 can perform communication by wireless communication. The communicator 6 supports a wireless communication standard. Examples of the wireless communication standard supported by the communicator 6 include, but are not limited to, cellular phone communication standards such as 2G, 3G, and 4G and short-range wireless communication standards. Examples of the cellular phone communication standards include, but are not limited to, Long Term Evolution (LTE), Wideband Code Division Multiple Access (W-CDMA), Worldwide Interoperability for Microwave Access (WiMAX) (registered trademark), Code Division Multiple Access 2000 (CDMA2000), Personal Digital Cellular (PDC), Global System for Mobile Communications (GSM) (registered trademark), and Personal Handy-phone System (PHS). Examples of the short-range wireless communication standards include, but are not limited to, IEEE802.11 (IEEE is the abbreviation of The Institute of Electrical and Electronics Engineers, Inc.), Bluetooth (registered trademark), Infrared Data Association (IrDA), Near Field Communication (NFC), and Wireless Personal Area Network (WPAN). Examples of the communication standard of WPAN include, but are not limited to, ZigBee (registered trademark), Digital Enhanced Cordless Telecommunications (DECT), Z-Wave, and Wireless Smart Utility Network (WiSun). The communicator 6 may support one or a plurality of the communication standards described above.

The receiver 7 can output sound signals transmitted from the controller 10 as sound. The receiver 7 can output sound of a video and sound of music reproduced by the smartphone 1 and voice of a partner on calling, for example. The microphone 8 converts voice of the user or the like into sound signal and transmits the sound signal to the controller 10.

The storage 9 can store therein computer programs and data. The storage 9 may be used as a work area that temporarily stores therein processing results of the controller 10. The storage 9 may include any non-transitory storage medium such as a semiconductor storage medium or a magnetic storage medium. The storage 9 may include a plurality of types of storage media. The storage 9 may include a combination of a storage medium such as a memory card, an optical disc, or a magneto-optical disc and a reading apparatus for the storage medium. The storage 9 may include a storage device used as a temporary storage area such as a random access memory (RAM).

The computer programs stored in the storage 9 include an application executed in the foreground or the background and a basic program that supports operation of the application. A screen of the application is displayed on the display 2A when being executed in the foreground, for example. Examples of the basic program include, but are not limited to, an operating system (OS). The application program and the basic program may be installed in the storage 9 via wireless communication by the communicator 6 or a non-transitory storage medium.

The storage 9 can store therein a control program 9A, an e-mail application 9B, a telephone application 9C, setting data 9Z, and the like.

The control program 9A can provide a function of determining whether the device is in a state of being in a train based on the measurement result of the acceleration sensor 15. The state of being in a train includes a case in which the user of the smartphone 1 carrying the smartphone 1 is riding in a train. The measurement result of the acceleration sensor 15 may contain magnitude and a direction of acceleration that the acceleration sensor 15 has measured. The train includes a vehicle that moves while receiving power supply from the outside. The train includes an electric motor vehicle that moves by receiving power supply via a pantograph, an electric motor vehicle that moves by receiving power supply via a rail, and an electric motor vehicle that moves by receiving power supply via a trolley line.

The control program 9A can provide a function of performing correction processing, or what is called calibration, for detecting the azimuth of the smartphone 1 by the geomagnetic sensor 16. In the present application, the calibration for detecting the azimuth of the smartphone 1 by the geomagnetic sensor 16 may be referred to simply as "calibration." When it is determined that the device is in the state of being in a train, the control program 9A can provide a function of stopping the calibration. The control program 9A can provide a function of, after determining that the device is in the state of being in a train, resuming the stopped calibration again triggered by determining that the device is not in the state of being in a train. The control program 9A may perform the calibration when a certain condition is satisfied. The control program 9A may stop the calibration by not performing the calibration even when the certain condition is satisfied. The control program 9A may stop the calibration by stopping determination whether the certain condition is satisfied. The control program 9A may stop the calibration by not reflecting data obtained by the calibration. The control program 9A may stop the calibration by not recording the data obtained by the calibration. The control program 9A may stop the calibration by not recording data obtained for the calibration.

An e-mail application 9B can provide an e-mail function for preparation, transmission, reception, display, and the like of e-mails. A telephone application 9C can provide a communication function for telephone conversation through wireless communication.

The setting data 9Z includes various kinds of data for use in the processing executed based on the functions provided by the control program 9A and the like. The setting data 9Z contains a determination condition for use in determination that the user of the smartphone 1 carrying the smartphone 1 is in the state of being in a train as reference information for determination. The reference information for determination may contain a direction and magnitude of acceleration acting on the smartphone 1 or an acceleration pattern including time-series change of the direction and the magnitude of the acceleration.

The controller 10 integrally controls the operation of the smartphone 1 and can thereby implement various kinds of functions. The controller 10 includes a processor. Examples of the processor include, but are not limited to, a central processing unit (CPU), a system-on-a-chip (SoC), a micro control unit (MCU), a field-programmable gate array (FPGA), and a coprocessor. The SoC may be integral with other components such as the communicator 6. The controller 10 is an example of a controller.

Specifically, the controller 10 executes commands contained in the computer programs stored in the storage 9 while referring to the data stored in the storage 9 as needed. The controller 10 controls functional modules in accordance with the data and the commands and thereby implements the various kinds of functions. Examples of the functional modules include, but are not limited to, at least one of the display 2A, the communicator 6, the microphone 8, the speaker 11, and the geomagnetic sensor 16. The controller 10 may change the control in accordance with detection results of detection modules. Examples of the detection modules include, but are not limited to, at least one of the touch screen 2B, the button 3, the illuminance sensor 4, the proximity sensor 5, the microphone 8, the camera 12, the camera 13, the acceleration sensor 15, the geomagnetic sensor 16, and the angular velocity sensor 17.

The controller 10 cooperates with the acceleration sensor 15 by executing the control program 9A. The controller 10 executes processing to determine whether the device is present in a train based on the detection result of the acceleration sensor 15. In other words, when the detection result of the acceleration sensor 15 matches the reference information contained in the setting data 9Z with certain accuracy, the controller 10 determines that the user of the device carrying the device is in the state of being in a train.

When it is determined that the device is present in a train by executing the control program 9A, the controller 10 may execute processing to stop the correction processing, or what is called calibration, for detecting the azimuth of the smartphone 1 by the geomagnetic sensor 16. The controller 10 may execute processing to enable the stopped calibration again triggered by determining that the device is not present in a train after determining that the device is present in a train by executing the control program 9A. In other words, the controller 10 may stop the calibration while it is determined that the device is present in a train by executing the control program 9A.

The speaker 11 can output sound signals transmitted from the controller 10 as sound. The speaker 11 may output ringtone and music, for example. One of the receiver 7 and the speaker 11 may also function as the other.

The camera 12 and the camera 13 can convert photographed images into electric signals. The camera 12 may be a front side camera that photographs an object facing the display 2A. The camera 13 may be a rear side camera that photographs an object facing the opposite face of the display 2A. The camera 12 and the camera 13 may be mounted on the smartphone 1 functionally and physically integrated as a camera unit that can use a front side camera and a rear side camera in a switchable manner.

The connector 14 includes a terminal to which another apparatus is connected. The connector 14 may include a general-purpose terminal such as Universal Serial Bus (USB), High-Definition Multimedia Interface (HDMI) (registered trademark), Light Peak (Thunderbolt (registered trademark)), or an earphone/microphone connector. The connector 14 may be an exclusive terminal such as a Dock connector. Examples of the apparatus connected to the connector 14 include, but are not limited to, an external storage, a speaker, and a communication apparatus.

The acceleration sensor 15 can measure the direction and the magnitude of the acceleration acting on the smartphone 1. The controller 10 may detect a change in the moving state of the smartphone 1 based on the direction and the magnitude of the acceleration detected by the acceleration sensor 15 or the acceleration pattern containing time-series change of the direction and the magnitude of the acceleration. The controller 10 determines the moving state of the smartphone 1 by executing the control program 9A. When the direction and the magnitude of the acceleration match the reference information with certain accuracy, the controller 10 may determine that the device is being in a train. The acceleration sensor 15 is an example of a first sensor. The direction and the magnitude of the acceleration detected by the acceleration sensor 15 are examples of information for determining whether the device is in the state of being in a train.

The geomagnetic sensor 16 can measure an orientation (azimuth) of the smartphone 1 by measuring geomagnetism, for example. The geomagnetic sensor 16 may be any of a two-axis type and a three-axis type. The geomagnetic sensor 16 is an example of a second sensor. The geomagnetic sensor 16 may measure an orientation and magnitude of a magnetic field. The controller 10 may determine whether the smartphone 1 is being in a vehicle based on the direction and the magnitude of the acceleration detected by the acceleration sensor 15 or the acceleration pattern. According to the invention, the controller 10 determines that a vehicle in which the device is being is a train based on a magnetic pattern including time-series change of the orientation and the magnitude of the magnetic field. The direction and the magnitude of the acceleration detected by the acceleration sensor 15 are examples of information for determining whether the device is in a state of being in any one of a plurality of vehicles including a train. The time-series change of the orientation and the magnitude of the magnetic field detected by the geomagnetic sensor 16 are examples of information for determining whether the vehicle in which the device is being is a train among the vehicles.

The angular velocity sensor 17 can measure magnitude and a direction of angular velocity of the smartphone 1, for example. The angular velocity sensor 17 can output the detected angular velocity to the controller 10. The controller 10 may detect a change in the orientation of the smartphone 1 based on the magnitude and the direction of the angular velocity detected by the angular velocity sensor 17 or an angular velocity pattern containing time-series change of the direction and the magnitude of the angular velocity. The controller 10 may change the azimuth of the smartphone 1 based on the change in the orientation of the smartphone 1 in an environment in which geomagnetism is unable to be detected, for example. The controller 10 may change the azimuth of the device based on the magnitude and the direction of the angular velocity detected by the angular velocity sensor 17 or the angular velocity pattern containing time-series change of the direction and the magnitude of the angular velocity when it is determined that the device is being in a train, for example. The angular velocity sensor 17 is an example of a third sensor.

The controller 10 may use the pieces of output of the acceleration sensor 15, the geomagnetic sensor 16, and the angular velocity sensor 17 in combination. The pieces of output of the sensors 15, 16, and 17 are used in combination, whereby the smartphone 1 can execute control by the controller 10 with highly reflecting the motion of the device. The acceleration sensor 15, the geomagnetic sensor 16, and the angular velocity sensor 17 may be used as one motion sensor.

The smartphone 1 may include a global positioning system (GPS) receiver and a vibrator in addition to the functional modules. The GPS receiver can receive radio signals with a certain frequency band from GPS satellites. The GPS receiver performs demodulation processing on the received radio signals and transmits the processed signals to the controller 10. The GPS receiver supports the arithmetic processing of the current position of the smartphone 1. The vibrator vibrates part or the whole of the smartphone 1. The vibrator includes a piezoelectric element, an eccentric motor, or the like in order to generate vibrations. The smartphone 1 includes functional modules, such as a battery, that is inevitably used for maintaining the functions of the smartphone 1, and a controller that is inevitably used for implementing the control of the smartphone 1.

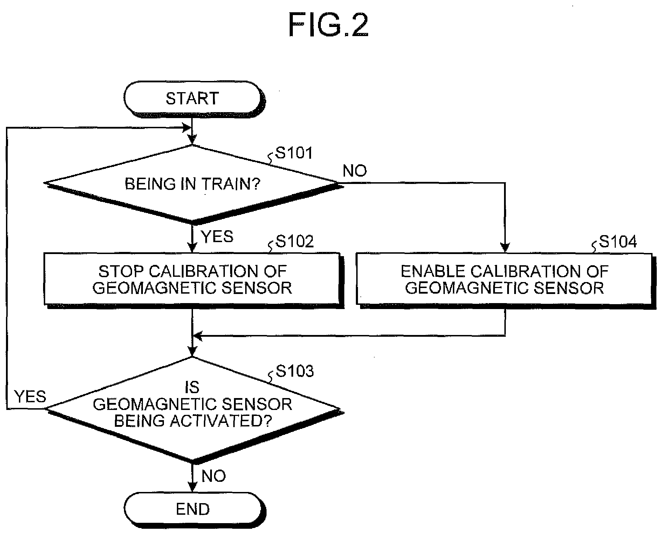

The following describes an example of processing executed by the smartphone 1 according to the embodiment with reference to FIG. 2. FIG. 2 is a flowchart of an example of the processing executed by the smartphone according to the embodiment. The processing illustrated in FIG. 2 is implemented by causing the controller 10 to execute the control program 9A stored in the storage 9. The processing illustrated in FIG. 2 is repeatedly executed while the geomagnetic sensor 16 is being activated.

As illustrated in FIG. 2, the controller 10 determines whether the device is in the state of being in a train (Step S101).

When the device is in the state of being in a train as a result of the determination (Yes at Step S101), the controller 10 stops the calibration of the geomagnetic sensor 16 (Step S102).

Subsequently, the controller 10 determines whether the geomagnetic sensor 16 is being activated (Step S103). When determining whether the geomagnetic sensor 16 is being activated, the controller 10 may determine whether an application using the measurement result of the geomagnetic sensor 16 is being executed.

When the geomagnetic sensor 16 is being activated as a result of the determination (Yes at Step S103), the controller 10 returns to the determination at Step S101.

In contrast, when the geomagnetic sensor 16 is not being activated as a result of the determination (No at Step S103), the controller 10 ends the processing illustrated in FIG. 2.

When the device is not in the state of being in a train as a result of the determination at Step S101 (No at Step S101), the controller 10 enables the calibration of the geomagnetic sensor 16 (Step S104) and proceeds to the determination at Step S103.

In the above example described as an embodiment, when it is determined that the device is in the state of being in a train, the smartphone 1 may stop the correction processing, or what is called calibration, for detecting the azimuth of the smartphone 1 by the geomagnetic sensor 16. This smartphone 1 can achieve control to cause the calibration of the geomagnetic sensor 16 not to be performed in a train in which the influence of a magnetic field on the device is large.

In embodiments, after determining that the device is in the state of v in a train, the smartphone 1 may enable the correction processing, or what is called calibration, for detecting the azimuth of the smartphone 1 by the geomagnetic sensor 16 again triggered by determining that the device is not in the state of being in a train. This smartphone 1 can achieve control to cause the calibration of the geomagnetic sensor 16 to be performed in an environment in which the influence of the magnetic field on the device is small.

Embodiments describe a case in which the smartphone 1 determines whether the device is in the state of being in a train, as a magnetic field environment in which the influence of the magnetic field on the device is large. However, the magnetic field environment is not limited to this case, and the smartphone 1 may detect an environment in which the influence of the magnetic field is large other than the state of being in a train and execute the control.

The example of the processing illustrated in FIG. 2 may be used in various kinds of electronic devices installing a geomagnetic sensor other than the smartphone 1.

## Claims

1. A mobile device (1), comprising:
a first sensor (15) as an acceleration sensor, configured to acquire information for determining whether the device (1) is in a state of being in any one of a plurality of vehicles including a train;
a second sensor (16) as a geomagnetic sensor configured to detect an azimuth of the device (1) by measuring an orientation and magnitude of a magnetic field; and
at least one controller (10);
wherein the at least one controller (10) is configured to determine whether the vehicle in which the device (1) is being the train among the plurality of vehicles, based on information acquired by the second sensor (16), the information comprising a magnetic pattern including time-series change of the orientation and the magnitude of the magnetitic field detected by the geomagnetic sensor; and
wherein the at least one controller (10) is configured to stop correction processing for detecting the azimuth of the device (1) by the second sensor (16) when the device (1) is determined to be in the state of being in the train.

2. The mobile device (1) according to claim 1, wherein the at least one controller (10) is configured to, after determining that the device (1) is in the state of being in a train, enable the correction processing triggered by determining that the device (1) is not in the state of being in a train.

3. The mobile device (1) according to claim 1 or 2, further comprising a third sensor (17) configured to acquire information for determining whether the device (1) has azimuthally rotated, wherein
when the device (1) is determined to be in the state of being in the train, the at least one controller (10) is configured to change the azimuth of the device (1) based on the information acquired by the third sensor (17).

4. The mobile device (1) according to any one of claims 1 to 3, wherein the at least one controller (10) is configured
to perform the correction processing when a certain condition is satisfied and,
not to perform the correction processing even when the certain condition is satisfied, when the device (1) is determined to be in the state of being in a train.

5. The mobile device (1) according to any one of claims 1 to 4, wherein
information that the acceleration sensor acquires contains magnitude of acceleration.

6. A control method executed by a mobile device (1) that includes a first sensor (15) as an acceleration sensor configured to acquire information for determining whether the device (1) is in a state of being in any one of a plurality of vehicles including a train and a second sensor (16) as a geomagnetic sensor configured to detect an azimuth of the device (1) by measuring geomagnetism, the control method comprising:
determining whether the device (1) is in the state of being in the train; and
stopping correction processing for detecting the azimuth of the device (1) by the second sensor (16) when the device (1) is determined to be in the state of being in the train, wherein
determining whether the vehicle in which the device (1) is being is the train among the plurality of vehicles is based on information acquired by the second sensor (16), the information comprising a magnetic pattern including time-series change of the orientation and the magnitude of the magnetic field detected by the second sensor.

7. A non-transitory storage medium that stores a control program for causing, when executed by a mobile device (1) including a first sensor (15) as an acceleration sensor configured to acquire information for determining whether the device (1) is in a state of being in any one of a plurality of vehicles including a train and a second sensor (16) as a geomagnetic sensor configured to detect an azimuth of the device (1) by measuring geomagnetism, the mobile device (1) to execute:
determining whether the device (1) is in the state of being in the train; and
stopping correction processing for detecting the azimuth of the device (1) by the second sensor (16) when the device (1) is determined to be in the state of being in the train, wherein
determining whether the vehicle in which the device (1) is being is the train among the plurality of vehicles based on information acquired by the second sensor (16), the information comprising a magnetic pattern including time-series change of the orientation and the magnitude of the magnetic field detected by the second sensor.

## Patentansprüche

1. Mobilvorrichtung (1) mit:
einem ersten Sensor (15) als Beschleunigungssensor, der konfiguriert ist, um Informationen zum Bestimmen zu erfassen, ob sich die Vorrichtung (1) in einem Zustand befindet, in dem sie sich in einem von mehreren Fahrzeugen einschließlich eines Zuges befindet;
einem zweiten Sensor (16) als geomagnetischen Sensor, der konfiguriert ist, um einen Azimut der Vorrichtung (1) durch Messen der Ausrichtung und Stärke eines Magnetfelds zu erfassen; und
mindestens einer Steuerung (10),
wobei die mindestens eine Steuerung (10) dazu konfiguriert ist, basierend auf Informationen, die durch den zweiten Sensor (16) erfasst werden, zu bestimmen, ob das Fahrzeug, in dem sich die Vorrichtung (1) befindet, unter der Vielzahl von Fahrzeugen der Zug ist, wobei die Information ein Magnetmuster umfasst, einschließlich einer Zeitreihen-Änderung der Ausrichtung und Stärke des vom geomagnetischen Sensor erfassten Magnetfelds, und
wobei die mindestens eine Steuerung dazu konfiguriert ist, die Korrekturverarbeitung zum Erfassen des Azimuts der Vorrichtung (1) durch den zweiten Sensor (16) zu stoppen, wenn bestimmt wird, dass die Vorrichtung (1) sich im Zug befindet.

2. Mobilvorrichtung (1) nach Anspruch 1, wobei die mindestens eine Steuerung (10) konfiguriert ist, um nach der Feststellung, dass sich die Vorrichtung (1) in einem Zug befindet, die Korrekturverarbeitung zu aktivieren, die durch die Bestimmung ausgelöst wird, dass die Vorrichtung (1) sich nicht in einem Zug befindet.

3. Mobilvorrichtung (1) nach Anspruch 1 oder 2, die ferner einen dritten Sensor (17) umfasst, der konfiguriert ist, um Informationen zu erfassen, um zu bestimmen, ob sich das Vorrichtung (1) azimutal gedreht hat, wobei
wenn bestimmt wird, dass sich die Vorrichtung (1) im Zug befindet, die mindestens eine Steuerung (10) dazu konfiguriert ist, den Azimut der Vorrichtung (1) basierend auf den von dem dritten Sensor (17) erfassten Informationen zu ändern.

4. Mobilvorrichtung (1) nach einem der Ansprüche 1 bis 3, wobei die mindestens eine Steuerung (10) konfiguriert ist:
um die Korrekturverarbeitung durchzuführen, wenn eine bestimmte Bedingung erfüllt ist und,
die Korrekturverarbeitung nicht durchzuführen, selbst wenn die bestimmte Bedingung erfüllt ist, wenn bestimmt wird, dass sich die Vorrichtung (1) in einem Zug befindet.

5. Mobilvorrichtung (1) nach einem der Ansprüche 1 bis 4, wobei
Informationen, die der Beschleunigungssensor erfasst, die Höhe der Beschleunigung enthalten.

6. Steuerverfahren, das von einer mobilen Vorrichtung (1) ausgeführt wird, die einen ersten Sensor (15) als einen Beschleunigungssensor umfasst, der dazu konfiguriert ist, Informationen zum Bestimmen zu erfassen, ob sich die Vorrichtung (1) in einem Zustand befindet, in dem sie sich in einem von mehreren Fahrzeugen einschließlich eines Zugs befindet, und einen zweiten Sensor (16) als geomagnetischen Sensor, der dazu konfiguriert ist, einen Azimut der Vorrichtung (1) durch Messen der Ausrichtung und Stärke eines Magnetfelds zu erfassen, wobei das Steuerverfahren umfasst:
Bestimmen, ob sich die Vorrichtung (1) im Zug befindet; und
Stoppen der Korrekturverarbeitung zum Erfassen des Azimuts der Vorrichtung (1) durch den zweiten Sensor (16), wenn bestimmt wird, dass die Vorrichtung (1) sich im Zug befindet, wobei
die Bestimmung, ob das Fahrzeug, in dem sich die Vorrichtung (1) befindet, unter der Vielzahl von Fahrzeugen der Zug ist, auf Informationen basiert, die durch den zweiten Sensor (16) erfasst werden,
wobei die Information ein Magnetmuster umfasst, einschließlich einer Zeitreihen-Änderung der Ausrichtung und Stärke des vom zweiten Sensor erfassten Magnetfelds.

7. Nicht-flüchtiges Speichermedium, das ein Steuerprogramm speichert, welches,
wenn es von einer Mobilvorrichtung (1) ausgeführt wird, die einen ersten Sensor (15) als Beschleunigungssensor aufweist, der konfiguriert ist, um Informationen zu erfassen, um zu bestimmen, ob sich die Vorrichtung (1) in einem Zustand befindet, in dem sie sich in einem von mehreren Fahrzeugen befindet, die einen Zug umfassen, und einen zweiten Sensor (16) als geomagnetischen Sensor, der dazu konfiguriert ist, einen Azimut der Vorrichtung (1) durch Messen des Geomagnetismus zu erfassen,
bewirkt, dass die mobile Vorrichtung (1) Folgendes ausführt:
Bestimmen, ob sich die Vorrichtung (1) im Zug befindet; und
Stoppen der Korrekturverarbeitung zum Erfassen des Azimuts der Vorrichtung (1) durch den zweiten Sensor (16), wenn bestimmt wird, dass die Vorrichtung (1) sich im Zug befindet, wobei
die Bestimmung, ob das Fahrzeug, in dem sich die Vorrichtung (1) befindet, unter der Vielzahl von Fahrzeugen der Zug ist, auf Informationen basiert, die durch den zweiten Sensor (16) erfasst werden,
wobei die Information ein Magnetmuster umfasst, einschließlich einer Zeitreihen-Änderung der Ausrichtung und Stärke des vom zweiten Sensor erfassten Magnetfelds.

## Revendications

1. Appareil mobile (1), comprenant:
un premier capteur (15) en tant que capteur d'accélération, configuré de façon à acquérir des informations pour déterminer si l'appareil (1) est dans un état selon lequel il se trouve dans l'un quelconque d'une pluralité de véhicules comprenant un train ;
un deuxième capteur (16) en tant que capteur géomagnétique configuré de façon à détecter un azimut de l'appareil (1) en mesurant une orientation et une magnitude d'un champ magnétique ; et
au moins un dispositif de commande (10) ;
dans lequel l'au moins un dispositif de commande (10) est configuré de façon à déterminer si le véhicule dans lequel l'appareil (1) se trouve est le train parmi la pluralité de véhicules, en fonction des informations acquises par le deuxième capteur (16), les informations comprenant un modèle magnétique comportant la modification de séries chronologiques de l'orientation et de la magnitude du champ magnétique détecté par le capteur géomagnétique ; et
dans lequel l'au moins un dispositif de commande (10) est configuré de façon à arrêter le traitement de correction pour la détection de l'azimut de l'appareil (1) par le deuxième capteur (16) lorsque l'appareil (1) est déterminé comme étant dans l'état selon lequel il se trouve dans le train.

2. Appareil mobile (1) selon la revendication 1, dans lequel l'au moins un dispositif de commande (10) est configuré de façon à, après la détermination du fait que l'appareil (1) est dans l'état selon lequel il se trouve dans un train, permettre le traitement de correction déclenché lorsqu'il est déterminé que l'appareil (1) n'est pas dans l'état selon lequel il se trouve dans un train.

3. Appareil mobile (1) selon la revendication 1 ou 2, comprenant en outre un troisième capteur (17) configuré de façon à acquérir des informations afin de déterminer si l'appareil (1) a effectué une rotation azimutale, dans lequel
lorsqu'il est déterminé que l'appareil (1) est dans l'état selon lequel il se trouve dans le train, l'au moins un dispositif de commande (10) est configuré pour modifier l'azimut de l'appareil (1) en fonction des informations acquises par le troisième capteur (17).

4. Appareil mobile (1) selon l'une quelconque des revendications 1 à 3, dans lequel l'au moins un dispositif de commande (10) est configuré de façon
à effectuer le traitement de correction lorsqu'une certaine condition est remplie et,
à ne pas effectuer le traitement de correction même lorsque la certaine condition est remplie, lorsqu'il est déterminé que l'appareil (1) est dans l'état selon lequel il se trouve dans un train.

5. Appareil mobile (1) selon l'une quelconque des revendications 1 à 4, dans lequel
les informations que le capteur d'accélération acquiert contiennent une amplitude d'accélération.

6. Procédé de commande exécuté par un appareil mobile (1) qui
comprend un premier capteur (15) en tant que capteur d'accélération configuré pour acquérir des informations afin de déterminer si l'appareil (1) est dans un état selon lequel il se trouve dans l'un quelconque d'une pluralité de véhicules comprenant un train et un deuxième capteur (16) en tant que capteur géomagnétique configuré de façon à détecter un azimut de l'appareil (1) en mesurant le géomagnétisme, le procédé de commande comprenant :
la détermination du fait que l'appareil (1) est ou non dans l'état selon lequel il se trouve dans le train ; et
l'arrêt du traitement de correction pour la détection de l'azimut de l'appareil (1) par le deuxième capteur (16) lorsqu'il est déterminé que l'appareil (1) est dans l'état selon lequel il se trouve dans le train, dans lequel
la détermination du fait que le véhicule dans lequel l'appareil (1) se trouve est ou non le train parmi la pluralité de véhicules repose sur les informations acquises par le deuxième capteur (16), les informations comprenant un modèle magnétique comportant la modification de séries chronologiques de l'orientation et de la magnitude du champ magnétique détecté par le deuxième capteur.

7. Support de stockage non transitoire qui stocke un programme de commande pour amener, lorsqu'il est exécuté par un appareil mobile (1) comportant un premier capteur (15) en tant que capteur d'accélération configuré pour acquérir des informations afin de déterminer si l'appareil (1) est dans un état selon lequel il se trouve dans l'un quelconque d'une pluralité de véhicules comprenant un train et un deuxième capteur (16) en tant que capteur géomagnétique configuré de façon à détecter un azimut de l'appareil (1) en mesurant le géomagnétisme, l'appareil mobile (1) à exécuter :
la détermination du fait que l'appareil (1) est ou non dans l'état selon lequel il se trouve dans le train ; et
l'arrêt du traitement de correction pour la détection de l'azimut de l'appareil (1) par le deuxième capteur (16) lorsqu'il est identifié que l'appareil (1) est dans l'état selon lequel il se trouve dans le train, dans lequel
la détermination du fait que le véhicule dans lequel l'appareil (1) se trouve est ou non le train parmi la pluralité de véhicules en fonction des informations acquises par le deuxième capteur (16), les informations comprenant un modèle magnétique comportant la modification de séries chronologiques de l'orientation et de la magnitude du champ magnétique détecté par le deuxième capteur.
